# EUROPEAN PATENT SPECIFICATION

(11) **EP 4 202 255 B1**
(45) Date of publication and mention of the grant of the patent: **20.03.2024**
(21) Application number: 22214634.2
(22) Date of filing: 19.12.2022
(51) Int. Cl.: F16F 9/05, F16F 9/38

(54) **AIR SPRING FOR VEHICLE AND VEHICLE**
LUFTFEDER FÜR FAHRZEUG UND FAHRZEUG
RESSORT PNEUMATIQUE POUR VÉHICULE ET VÉHICULE

(30) Priority: 20.12.2021 CN 202111566571
(43) Date of publication of application: 28.06.2023
(73) Proprietor: Nio Technology (Anhui) Co., Ltd, Hefei City, Anhui 230601 (CN)
(72) Inventor: YANG, Tian, Jiading Shanghai (CN); FENG, Xinyun, Jiading Shanghai (CN)
(74) Representative: Vossius & Partner Patentanwälte Rechtsanwälte mbB

(56) References cited:
- DE-A1-102005 028 754
- DE-A1-102015 118 395
- DE-U- 7 047 641
- US-A1- 2019 331 192

## Description

### Technical Field

The disclosure relates to an air spring for a vehicle and a vehicle.

### Background Art

With the rapid development of the vehicle industry, consumers have higher and higher requirements for vehicle performance. Compared with metal springs, air springs have excellent elasticity, and can adjust the air pressure with the change of load, which greatly improves the comfort during driving of the vehicle. Meanwhile, the air spring can well isolate high-frequency vibrations, enhance ride comfort, reduce noises, and increase the service life of parts. Thereby, air springs are widely used in the field of vehicles. A venting structure of an existing air spring for a vehicle, due to the principle and the structure thereof, is unable to filter the dust and sand in the air, thereby causing damage to or even failure of a rubber bladder in the air spring. Document DE102015118395 which is considered as the closest prior art, discloses an air spring for a vehicle with venting arrangement.

In order to solve the above-mentioned problems, in the existing air spring for a vehicle, usually a filter screen is provided at an air inlet to filter the dust and sand in the air.

However, in the existing air spring for a vehicle, filtering the dust and sand in the air by providing the filter screen at the air inlet usually has the problems of a poor filtering effect and frequent replacement of a filter screen.

Accordingly, there is a need in the art for a new air spring for a vehicle and a vehicle to solve the above problems.

### Summary of the Disclosure

In order to solve the problems in the prior art, the disclosure provides an air spring for a vehicle, the air spring comprising a dust-proof shade, an inner core and a bladder, wherein the inner core is in the shape of an upwardly open barrel, the dust-proof shade surrounds an outer side of a sidewall of the inner core, the dust-proof shade encloses a chamber with the sidewall of the inner core, and the bladder is arranged inside the chamber; and the sidewall of the inner core is provided with a first breathing hole and a second breathing hole, an inner side of the inner core is in communication with the outside through the first breathing hole, the inner side of the inner core is in communication with the chamber through the second breathing hole, and the first breathing hole and the second breathing hole are both arranged away from a bottom portion of the inner core.

In the above preferred technical solution of the air spring for a vehicle, a protrusion is provided at a middle position of the bottom portion of the inner core, the protrusion forms a first platform, and the protrusion forms an annular cavity with the inner side of the sidewall of the inner core.

In the above preferred technical solution of the air spring for a vehicle, a plurality of baffles are provided inside the annular cavity, and the baffles abut against an inner ring and an outer ring of the annular cavity respectively on two radial sides of the annular cavity to form a plurality of sand accommodating chambers.

In the above preferred technical solution of the air spring for a vehicle, an outer sidewall of each of the sand accommodating chambers is provided with the first breathing hole and the second breathing hole.

In the above preferred technical solution of the air spring for a vehicle, the first breathing holes and the second breathing holes are alternately arranged on the outer sidewalls of two adjacent sand accommodating chambers.

In the above preferred technical solution of the air spring for a vehicle, a bottom portion of the baffle is connected to the bottom portion of the inner core, and a top portion of the baffle is connected to a top portion of the inner core.

In the above preferred technical solution of the air spring for a vehicle, the air spring further comprises a seal cover, a notch is provided at an opening of the inner core, the seal cover covers the opening of the inner core, and the notch and the seal cover together enclose the first breathing hole.

In the above preferred technical solution of the air spring for a vehicle, the first breathing hole is further away from the bottom portion of the inner core than the second breathing hole.

In the above preferred technical solution of the air spring for a vehicle, a protruded edge is provided on the outer side of the sidewall of the inner core, a groove is provided on the dust-proof shade, and the dust-proof shade is clamped on the protruded edge through the groove.

The disclosure further provides a vehicle. The vehicle comprises an air spring for a vehicle according to any one of the foregoing technical solutions.

It can be understood by those skilled in the art that in the technical solution of the disclosure, an air spring comprises a dust-proof shade, an inner core and a bladder, wherein the inner core is in the shape of an upwardly open barrel, the dust-proof shade surrounds an outer side of a sidewall of the inner core, the dust-proof shade encloses a chamber with the sidewall of the inner core, and the bladder is arranged inside the chamber; and the sidewall of the inner core is provided with a first breathing hole and a second breathing hole, an inner side of the inner core is in communication with the outside through the first breathing hole, the inner side of the inner core is in communication with the chamber through the second breathing hole, and the first breathing hole and the second breathing hole are both arranged away from a bottom portion of the inner core.

In the above configuration, the inner core of the air spring for a vehicle according to the disclosure is in the shape of an upwardly open barrel, the dust-proof shade encloses the chamber with the sidewall of the inner core, the sidewall of the inner core is further provided with the first breathing hole and the second breathing hole, the inner side of the inner core is in communication with the outside through the first breathing hole, the inner side of the inner core is in communication with the chamber through the second breathing hole, and the first breathing hole and the second breathing hole are both arranged away from the bottom portion of the inner core, such that air enters the inner side of the inner core through the first breathing hole and can flow out from the inner side of the inner core through the second breathing hole and flow into the chamber enclosed by the dust-proof shade and the inner core. In the above air flow process, the air firstly enters the inner side of the inner core, at this time, the dust and sand in the air falls on the bottom portion of the inner side of the inner core under the action of its own gravity, and then the air further enters the chamber through the second breathing hole, such that the dust and sand in the air is filtered, and the dust and sand is prevented from entering the chamber together with the air, thereby protecting the bladder arranged in the chamber from being damaged, and increasing the service life of the air spring. In addition, compared with an existing air spring for a vehicle, the air spring for a vehicle according to the disclosure improves a filtering effect on the dust and sand in the air, and also solves the problem of frequent replacement of a filter screen.

### Brief Description of the Drawings

An air spring for a vehicle and a vehicle according to the disclosure are described below with reference to the drawings. In the accompanying drawings:
Fig. 1 is a top view of an air spring for a vehicle;
Fig. 2 is a sectional view at A-A of the air spring for a vehicle; and
Fig. 3 is a sectional view at B-B of the air spring for a vehicle.

List of reference numerals:
1- Dust-proof shade; 11- Chamber; 12 - Groove;
2- Inner core; 21- Sidewall; 211- First breathing hole; 212- Second breathing hole; 213- Annular cavity; 2131- Baffle; 2132- Inner ring; 2133- Outer ring; 2134- Sand accommodating chamber; 214- Protruded edge; 22- Bottom portion; 221-Protrusion; 2211- First platform; 23- Notch; 24- Top portion;
3- Bladder.

### Detailed Description of Embodiments

Preferred implementations of the disclosure are described below with reference to the accompanying drawings. Those skilled in the art should understand that these implementations are only used to explain the technical principles of the disclosure, and are not intended to limit the scope of protection of the disclosure. Those skilled in the art can make adjustments according to requirements so as to adapt to specific application scenarios. For example, although a first breathing hole being a square hole and a second breathing hole being a circular hole are taken as examples to describe the shapes of the first breathing hole and the second breathing hole, in the disclosure, the shapes of the first breathing hole and the second breathing hole are not limited to this, as long as the first breathing hole and the second breathing hole may satisfy that the air can enter an inner side of an inner core through the first breathing hole and flow out from the inner side of the inner core through the second breathing hole, and can flow into a chamber. For example, the shape of the first breathing hole may also be a ring, a trapezoid, a triangle, etc., and the shape of the second breathing hole may also be a square, a trapezoid, a triangle, etc.

It should be noted that, in the description of the disclosure, the terms that indicate the direction or positional relationship, such as "inner", and "outer", are based on the direction or positional relationship shown in the figures, which is merely for ease of description instead of indicating or implying that the device or element must have a particular orientation or be constructed and operated in a particular orientation, and therefore, should not be construed as limiting the disclosure. In addition, the terms "first" and "second" are used for descriptive purposes only, and cannot be understood as indicating or implying relative importance.

In addition, it should also be noted that, in the description of the disclosure, the terms "connect" should be interpreted in a broad sense unless explicitly defined and limited otherwise, which, for example, may mean a fixed connection, a detachable connection or an integral connection; may be a direct connection, or an indirect connection through an intermediate medium. For a person skilled in the art, the specific meanings of the terms described above in the disclosure are capable of being interpreted according to the specific conditions.

In an existing air spring for a vehicle, due to the principle and the structure thereof, a venting structure of the air spring itself is unable to filter the dust and sand in the air. The dust and sand in the air entering the air spring needs to be filtered to avoid direct contact of the dust and sand in the air with a bladder in the air spring, thereby protecting the bladder and increasing the service life of the air spring. Therefore, usually a filter screen is provided at an air inlet to filter the dust and sand in the air.

However, filtering the dust and sand in the air by providing the filter screen at the air inlet usually has the problems of a poor filtering effect and frequent replacement of a filter screen.

Thus, the disclosure provides a new air spring for a vehicle and a vehicle.

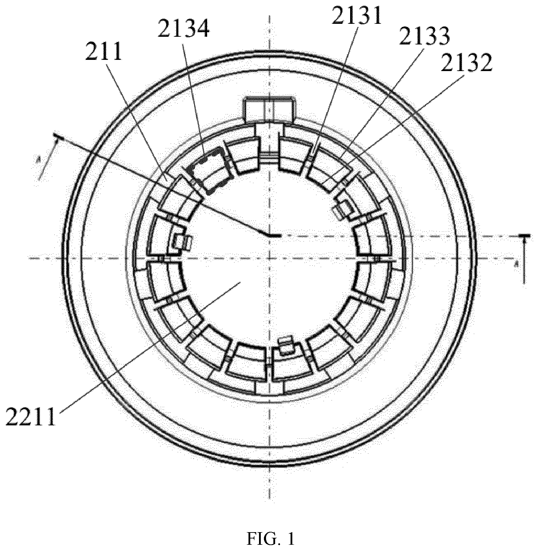

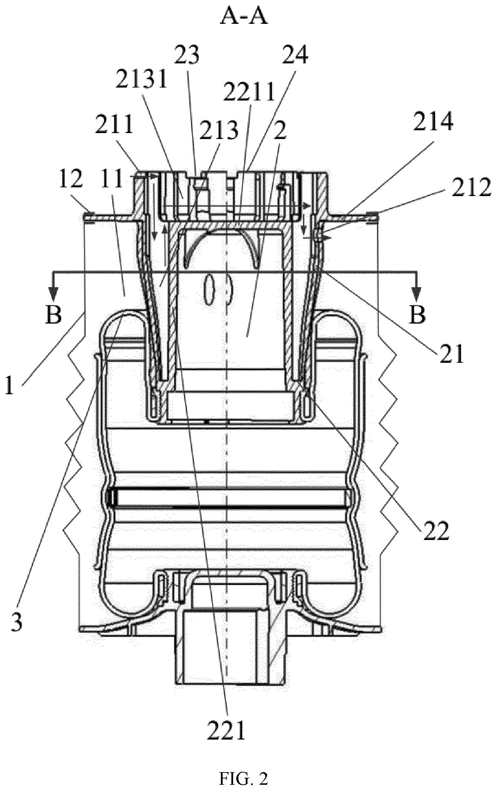

Referring to Figs. 1 and 2 first, an air spring for a vehicle according to the disclosure is described.

As shown in Figs. 1 and 2, an air spring for a vehicle according to the disclosure comprises a dust-proof shade 1, an inner core 2 and a bladder 3, wherein the inner core 2 is in the shape of an upwardly open barrel, the dust-proof shade 1 surrounds an outer side of a sidewall 21 of the inner core 2, the dust-proof shade 1 encloses a chamber 11 with the sidewall 21 of the inner core 2, and the bladder 3 is arranged inside the chamber 11; and the sidewall 21 of the inner core 2 is provided with a first breathing hole 211 and a second breathing hole 212, an inner side of the inner core 2 is in communication with the outside through the first breathing hole 211, the inner side of the inner core 2 is in communication with the chamber 11 through the second breathing hole 212, and the first breathing hole 211 and the second breathing hole 212 are both arranged away from a bottom portion 22 of the inner core 2.

In the above configuration, the inner core 2 of the air spring for a vehicle according to the disclosure is in the shape of an upwardly open barrel, the dust-proof shade 1 encloses the chamber 11 with the sidewall 21 of the inner core 2, the sidewall 21 of the inner core 2 is further provided with the first breathing hole 211 and the second breathing hole 212, the inner side of the inner core 2 is in communication with the outside through the first breathing hole 211, the inner side of the inner core 2 is in communication with the chamber 11 through the second breathing hole 212, and the first breathing hole 211 and the second breathing hole 212 are both arranged away from the bottom portion 22 of the inner core 2, such that air enters the inner side of the inner core 2 through the first breathing hole 211 and can flow out from the inner side of the inner core 2 through the second breathing hole 212 and flow into the chamber 11 enclosed by the dust-proof shade 1 and the inner core 2, and a flow path of the air is in a direction shown by an arrow in Fig. 2. In the above air flow process, the air firstly enters the inner side of the inner core 2, at this time, the dust and sand in the air falls on the bottom portion of the inner side of the inner core 2 under the action of its own gravity, and then the filtered air further enters the chamber 11 through the second breathing hole 212, such that the dust and sand in the air is filtered, and the dust and sand is prevented from entering the chamber 11 together with the air, thereby protecting the bladder 3 arranged in the chamber 11 from being damaged, and increasing the service life of the air spring. In addition, compared with the existing air spring for a vehicle, the air spring for a vehicle according to the disclosure improves a filtering effect on the dust and sand in the air, and also solves the problem of frequent replacement of a filter screen.

In this embodiment, the first breathing hole 211 is a square hole, and the second breathing hole 212 is a circular hole.

It can be understood that, although in this embodiment the first breathing hole 211 being a square hole and the second breathing hole 212 being a circular hole are taken as examples to describe the shapes of the first breathing hole 211 and the second breathing hole 212, in this embodiment, the shapes of the first breathing hole 211 and the second breathing hole 212 are not limited to this, as long as the first breathing hole 211 and the second breathing hole 212 may satisfy that the air can enter the inner side of the inner core 2 through the first breathing hole 211 and flow out from the inner side of the inner core 2 through the second breathing hole 212, and can flow into the chamber 11. For example, the shape of the first breathing hole 211 may also be a ring, a trapezoid, a triangle, etc., and the shape of the second breathing hole 212 may also be a square, a trapezoid, a triangle, etc.

Further referring to Figs. 1 to 3, the air spring for a vehicle according to the disclosure is described in detail below.

As shown in Fig. 2, in a possible implementation, a protrusion 221 is provided at a middle position of the bottom portion 22 of the inner core 2, the protrusion 221 forms a first platform 2211, and the protrusion 221 forms an annular cavity 213 with the inner side of the sidewall 21 of the inner core 2.

In this embodiment, the protrusion 221 is provided at the middle position of the bottom portion 22 of the inner core 2, the protrusion 221 forms the first platform 2211, and the protrusion 221 forms the annular cavity 213 with the outer side of the sidewall 21 of the inner core 2, such that the air firstly enters the inner side of the annular cavity 213 through the first breathing hole 211. At this time, the dust and sand in the air falls on the bottom portion of the annular cavity 213 under the action of its own gravity, such that the dust and sand in the air is filtered, and then the filtered air further enters the chamber 11 through the second breathing hole 212, such that the dust and sand is prevented from entering the chamber 11 together with the air, thereby protecting the bladder 3 arranged in the chamber 11 from being damaged, and increasing the service life of the air spring. Further, the annular cavity 213 in this embodiment can also play a better role in collecting the dust and sand in the air.

In addition, in this embodiment, the protrusion 221 is provided at the middle position of the bottom portion 22 of the inner core 2, to also enhance the structural strength of the inner core 2, thereby increasing the overall structural strength of the air spring and improving the durability of the air spring.

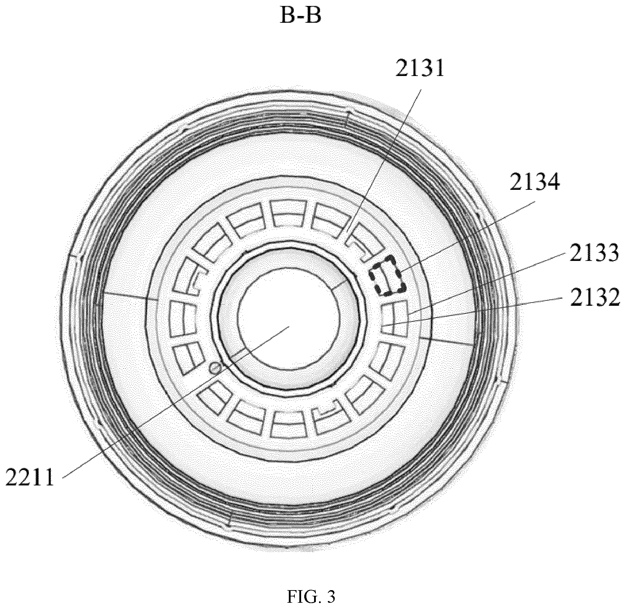

In order to further improve the filtering effect on the dust and sand in the air to prevent the dust and sand from entering the chamber 11 with the air, in this embodiment, a plurality of baffles 2131 are provided inside the annular cavity 213, and the baffles 2131 abut against an inner ring 2132 and an outer ring 2133 of the annular cavity 213 respectively on two radial sides of the annular cavity 213 to form a plurality of sand accommodating chambers 2134 (the sand accommodating chamber 2134 is an area shown as a dashed box in Fig. 1 and Fig. 3). An outer sidewall of each sand accommodating chamber 2134 is provided with the first breathing hole 211 and the second breathing hole 212.

In the above configuration, the air firstly enters the sand accommodating chamber 2134 through the first breathing hole 211 provided on the outer sidewall of the sand accommodating chamber 2134, the dust and sand in the air falls on a bottom portion of the sand accommodating chamber 2134 under the action of its own gravity, and then the filtered air further flows out from the sand accommodating chamber 2134 through the second breathing hole 212 provided on the sand accommodating chamber 2134 and flows into the chamber 11, such that the dust and sand is prevented from entering the chamber 11 together with the air. In this embodiment, the plurality of baffles 2131 are provided in the annular cavity 213 to form the plurality of sand accommodating chambers 2134, and the outer sidewall of each sand accommodating chamber 2134 is provided with the first breathing hole 211 and the second breathing hole 212, so as to filter multiple airflows at the same time, reduce the interference between the airflows, and prevent one airflow from blowing up grit deposited in another chamber, thereby improving the filtering effect and filtering efficiency on the air.

As shown in Figs. 1 to 3, in order to further improve the filtering effect on the dust and sand in the air, in this embodiment, the first breathing holes 211 and the second breathing holes 212 are alternately arranged on the outer sidewalls of two adjacent sand accommodating chambers 2134.

In this embodiment, the first breathing holes 211 and the second breathing holes 212 are alternately arranged on the outer sidewalls of two adjacent sand accommodating chambers 2134, such that the air firstly enters the sand accommodating chamber 2134 through the first breathing hole 211 provided on the outer sidewall of the sand accommodating chamber 2134, the dust and sand in the air falls on the bottom portion of the sand accommodating chamber 2134 under the action of its own gravity, and then the air needs to pass through a gap between the baffle 2131 and a top portion 24 of the inner core 2, bypass the baffle 2131, and enter the chamber 11 through the second breathing hole 212 provided on the outer sidewall of the adjacent sand accommodating chamber 2134. As such, in the above air flow process, if the grit tends to follow the air to enter the second breathing hole 212, the grit must be at least blown up to a height higher than one baffle 2131, which increases the flow path of the air in the annular cavity 213, and improves the filtering effect on the air. The baffle 2131 has a strong blocking effect on the dust and sand in the air, so as to block the dust and sand in the air from entering the chamber 11, and to further improve the filtering effect on the air.

As shown in Fig. 2, in a possible implementation, the first breathing hole 211 is further away from the bottom portion 22 of the inner core 2 than the second breathing hole 212.

In this embodiment, relative positions of the first breathing hole 211 and the second breathing hole 212 are configured such that the first breathing hole 211 is further away from the bottom portion 22 of the inner core 2 than the second breathing hole 212, to achieve a certain height difference between the first breathing hole 211 and the second breathing hole 212 along an axial direction of the inner core 2 in the shape of an upwardly open barrel (that is, along the axial direction of the inner core 2 in the shape of an upwardly open barrel, the first breathing hole 211 is located above the second breathing hole 212), so that during the process in which the air enters the inner side of the inner core 2 through the first breathing hole 211, and flows out from the inner side of the inner core 2 through the second breathing hole 212 and enters the chamber 11, the air can flow through the above flow path more smoothly.

In a possible implementation, a bottom portion of the baffle 2131 is connected to the bottom portion 22 of the inner core 2, and a top portion of the baffle 2131 is connected to the top portion 24 of the inner core 2.

In this embodiment, the baffle 2131 is arranged such that the bottom portion of the baffle 2131 is connected to the bottom portion 22 of the inner core 2, and the top portion of the baffle 2131 is connected to the top portion 24 of the inner core 2, so as to increase the structural strength of the inner core 2, thereby increasing the overall structural strength of the air spring, and improving the durability of the air spring.

As shown in Fig. 2, in a possible implementation, the air spring further comprises a seal cover (not shown in the figure), a notch 23 is provided at an opening of the inner core 2, the seal cover covers the opening of the inner core 2, and the notch 23 and the seal cover together enclose the first breathing hole 211.

In this embodiment, the notch 23 is provided at the opening of the inner core 2, and the seal cover covers the opening of the inner core 2, such that the notch 23 and the seal cover together enclose the first breathing hole 211, which can provide a necessary air inlet for the air to enter the inner side of the inner core 2, and can also facilitate the assembly of the air spring to a vehicle body.

As shown in Fig. 2, in order to facilitate the assembly of the inner core 2 and the dust-proof shade 1, in this embodiment, a protruded edge 214 is provided on the outer side of the sidewall 21 of the inner core 2, the dust-proof shade 1 is provided with a groove 12, and the dust-proof shade 1 is clamped on the protruded edge 214 through the groove 12.

In this embodiment, the protruded edge 214 is provided on the outer side of the sidewall 21 of the inner core 2, the groove 12 is provided on the dust-proof shade 1, and the dust-proof shade 1 is clamped to the protruded edge 214 through the groove 12, which makes it easy to assembly the dust-proof shade 1 with the inner core 2.

To sum up, in the above configuration, the inner core 2 of the air spring for a vehicle according to the disclosure is in the shape of an upwardly open barrel, the dust-proof shade 1 encloses the chamber 11 with the sidewall 21 of the inner core 2, the sidewall 21 of the inner core 2 is further provided with the first breathing hole 211 and the second breathing hole 212, the inner side of the inner core 2 is in communication with the outside through the first breathing hole 211, the inner side of the inner core 2 is in communication with the chamber 11 through the second breathing hole 212, and the first breathing hole 211 and the second breathing hole 212 are both arranged away from the bottom portion 22 of the inner core 2, such that the air enters the inner side of the inner core 2 through the first breathing hole 211 and can flow out from the inner side of the inner core 2 through the second breathing hole 212 and flow into the chamber 11 enclosed by the dust-proof shade 1 and the inner core 2. In the above air flow process, the air firstly enters the inner side of the inner core 2, at this time, the dust and sand in the air falls on the bottom portion of the inner side of the inner core 2 under the action of its own gravity, and then the filtered air further enters the chamber 11 through the second breathing hole 212, such that the dust and sand in the air is filtered, and the dust and sand is prevented from entering the chamber 11 together with the air, thereby protecting the bladder 3 arranged in the chamber 11 from being damaged, and increasing the service life of the air spring. In addition, compared with the existing air spring for a vehicle, the air spring for a vehicle according to the disclosure improves a filtering effect on the dust and sand in the air, and also solves the problem of frequent replacement of a filter screen.

Further, the protrusion 221 is provided at the middle position of the bottom portion 22 of the inner core 2, the protrusion 221 forms the first platform 2211, the protrusion 221 forms the annular cavity 213 with the outer side of the sidewall 21 of the inner core 2, and the annular cavity 213 in this embodiment can better collect the dust and sand in the air. Moreover, the protrusion 221 is provided at the middle position of the bottom portion 22 of the inner core 2, to also enhance the structural strength of the inner core 2, thereby increasing the overall structural strength of the air spring and improving the durability of the air spring.

In addition, the plurality of baffles 2131 are provided inside the annular cavity 213, and the baffles 2131 abut against the inner ring 2132 and the outer ring 2133 of the annular cavity 213 respectively on two radial sides of the annular cavity 213 to form the plurality of sand accommodating chambers 2134. Moreover, the first breathing hole 211 and the second breathing hole 212 are arranged in different configurations on the outer sidewall of the sand accommodating chamber 2134, so as to filter multiple airflows at the same time, reduce the interference between the airflows, and prevent one airflow from blowing up the grit deposited in another chamber, thereby improving the filtering efficiency and the filtering effect on the air.

It should be noted that the foregoing implementations are only used to explain the principles of the disclosure, and are not intended to limit the scope of protection of the disclosure. Those skilled in the art can adjust the foregoing structures without departing from the principle of the disclosure, so that the disclosure is applicable to more specific application scenarios.

In addition, the disclosure further provides a vehicle. The vehicle is provided with an air spring for a vehicle according to any one of the foregoing implementations.

## Claims

1. An air spring for a vehicle, comprising a dust-proof shade (1), an inner core (2) and a bladder (3) wherein the inner core is in the shape of an upwardly open barrel, the dust-proof shade surrounds an outer side of a sidewall (21) of the inner core, the dust-proof shade encloses a chamber (11) with the sidewall of the inner core, and the bladder is arranged inside the chamber; and **characterised in that** the sidewall of the inner core is provided with a first breathing hole (211) and a second breathing hole (212), an inner side of the inner core is in communication with the outside through the first breathing hole, the inner side of the inner core is in communication with the chamber through the second breathing hole, and the first breathing hole and the second breathing hole are both arranged away from a bottom portion (22) of the inner core.

2. The air spring for a vehicle according to claim 1, wherein a protrusion is provided at a middle position of the bottom portion of the inner core, the protrusion forms a first platform, and the protrusion forms an annular cavity with the inner side of the sidewall of the inner core.

3. The air spring for a vehicle according to claim 2, wherein a plurality of baffles are provided inside the annular cavity, and the baffles abut against an inner ring and an outer ring of the annular cavity respectively on two radial sides of the annular cavity to form a plurality of sand accommodating chambers.

4. The air spring for a vehicle according to claim 3, wherein an outer sidewall of each of the sand accommodating chambers is provided with the first breathing hole and the second breathing hole.

5. The air spring for a vehicle according to claim 3 or 4, wherein the first breathing holes and the second breathing holes are alternately arranged on the outer sidewalls of two adjacent sand accommodating chambers.

6. The air spring for a vehicle according to claim 3, 4 or 5, wherein a bottom portion of the baffle is connected to the bottom portion of the inner core, and a top portion of the baffle is connected to a top portion of the inner core.

7. The air spring for a vehicle according to any one of claims 1 to 6, wherein the air spring further comprises a seal cover, a notch is provided at an opening of the inner core, the seal cover covers the opening of the inner core, and the notch and the seal cover together enclose the first breathing hole.

8. The air spring for a vehicle according to any one of claims 1 to 7, wherein the first breathing hole is further away from the bottom portion of the inner core than the second breathing hole.

9. The air spring for a vehicle according to any one of claims 1 to 8, wherein a protruded edge is provided on the outer side of the sidewall of the inner core, a groove is provided on the dust-proof shade, and the dust-proof shade is clamped on the protruded edge through the groove.

10. A vehicle, comprising an air spring for a vehicle according to any one of claims 1 to 9.

## Patentansprüche

1. Luftfeder für ein Fahrzeug, aufweisend einen staubdichten Schirm (1), einen inneren Kern (2) und eine Blase (3), wobei der innere Kern in der Form eines nach oben offenen Zylinders ist, der staubdichte Schirm eine Außenseite einer Seitenwand (21) des inneren Kerns umgibt, der staubdichte Schirm eine Kammer (11) mit der Seitenwand des inneren Kerns einschließt und die Blase innerhalb der Kammer angeordnet ist; und
**dadurch gekennzeichnet, dass** die Seitenwand des inneren Kerns mit einem ersten Lüftungsloch (211) und einem zweiten Lüftungsloch (212) versehen ist und dass eine Innenseite des inneren Kerns über das erste Lüftungsloch in Kommunikation mit der Außenseite ist, die Innenseite des inneren Kerns über das zweite Lüftungsloch in Kommunikation mit der Kammer ist und dass das erste Lüftungsloch und das zweite Lüftungsloch beide entfernt von einem unteren Teil (22) des inneren Kerns angeordnet sind.

2. Luftfeder für ein Fahrzeug nach Anspruch 1, wobei ein Vorsprung an einer mittleren Position des unteren Teils des inneren Kerns bereitgestellt ist, der Vorsprung eine erste Plattform bildet und der Vorsprung einen ringförmigen Hohlraum mit der Innenseite der Seitenwand des inneren Kerns bildet.

3. Luftfeder für ein Fahrzeug nach Anspruch 2, wobei mehrere Leitbleche im Inneren des ringförmigen Hohlraums bereitgestellt sind und die Leitbleche an einem inneren Ring bzw. einem äußeren Ring des ringförmigen Hohlraums auf zwei radialen Seiten des ringförmigen Hohlraums anliegen, um mehrere Sand aufnehmende Kammern zu bilden.

4. Luftfeder für ein Fahrzeug nach Anspruch 3, wobei eine äußere Seitenwand jeder der Sand aufnehmenden Kammern mit dem ersten Lüftungsloch und dem zweiten Lüftungsloch versehen ist.

5. Luftfeder für ein Fahrzeug nach Anspruch 3 oder 4, wobei die ersten Lüftungslöcher und die zweiten Lüftungslöcher an den äußeren Seitenwänden von zwei angrenzenden Sand aufnehmenden Kammern alternierend angeordnet sind.

6. Luftfeder für ein Fahrzeug nach Anspruch 3, 4 oder 5, wobei ein unterer Teil des Leitblechs mit dem unteren Teil des inneren Kerns verbunden ist und ein oberer Teil des Leitblechs mit einem oberen Teil des inneren Kerns verbunden ist.

7. Luftfeder für ein Fahrzeug nach einem der Ansprüche 1 bis 6, wobei die Luftfeder ferner eine Dichtungsabdeckung aufweist, wobei eine Kerbe an einer Öffnung des inneren Kerns bereitgestellt ist, wobei die Dichtungsabdeckung die Öffnung des inneren Kerns abdeckt und wobei die Kerbe und die Dichtungsabdeckung zusammen das erste Lüftungsloch einschließen.

8. Luftfeder für ein Fahrzeug nach einem der Ansprüche 1 bis 7, wobei das erste Lüftungsloch weiter vom unteren Teil des inneren Kerns entfernt ist als das zweite Lüftungsloch.

9. Luftfeder für ein Fahrzeug nach einem der Ansprüche 1 bis 8, wobei eine vorspringende Kante an der Außenseite der Seitenwand des inneren Kerns bereitgestellt ist, eine Nut an dem staubdichten Schirm bereitgestellt ist und der staubdichte Schirm durch die Nut an der vorspringenden Kante angeklemmt ist.

10. Fahrzeug, aufweisend eine Luftfeder für ein Fahrzeug nach einem der Ansprüche 1 bis 9.

## Revendications

1. Ressort pneumatique pour un véhicule, comprenant un cache anti-poussière (1), un noyau intérieur (2) et une vessie (3), le noyau intérieur prenant la forme d'un barillet ouvert vers le haut, le cache anti-poussière entourant un côté extérieur d'une paroi latérale (21) du noyau intérieur, le cache anti-poussière délimitant une chambre (11) avec la paroi latérale du noyau intérieur, et la vessie étant agencée à l'intérieur de la chambre ; et **caractérisé en ce que** la paroi latérale du noyau intérieur est pourvue d'un premier trou de respiration (211) et d'un deuxième trou de respiration (212), un côté intérieur du noyau intérieur étant en communication avec l'extérieur via le premier trou de respiration, le côté intérieur du noyau intérieur étant en communication avec la chambre via le deuxième trou de respiration, et le premier trou de respiration et le deuxième trou de respiration étant tous deux agencés à l'écart d'une partie inférieure (22) du noyau intérieur.

2. Ressort pneumatique pour un véhicule selon la revendication 1, une protubérance étant ménagée à une position médiane de la partie inférieure du noyau intérieur, la protubérance formant une première plateforme, et la protubérance formant une cavité annulaire avec le côté intérieur de la paroi latérale du noyau intérieur.

3. Ressort pneumatique pour un véhicule selon la revendication 2, une pluralité de déflecteurs étant ménagés à l'intérieur de la cavité annulaire, et les déflecteurs venant en butée contre un anneau intérieur et un anneau extérieur de la cavité annulaire respectivement sur deux côtés radiaux de la cavité annulaire pour former une pluralité de chambres contenant du sable.

4. Ressort pneumatique pour un véhicule selon la revendication 3, une paroi latérale extérieure de chacune des chambres contenant du sable étant pourvue du premier trou de respiration et du deuxième trou de respiration.

5. Ressort pneumatique pour un véhicule selon la revendication 3 ou 4, les premiers trous de respiration et les deuxièmes trous de respiration étant agencés en alternance sur les parois latérales extérieures de deux chambres contenant du sable adjacentes.

6. Ressort pneumatique pour un véhicule selon la revendication 3, 4 ou 5, une partie inférieure du déflecteur étant reliée à la partie inférieure du noyau intérieur, et une partie supérieure du déflecteur étant reliée à une partie supérieure du noyau intérieur.

7. Ressort pneumatique pour un véhicule selon l'une quelconque des revendications 1 à 6, le ressort pneumatique comprenant en outre un couvercle étanche, une encoche étant ménagée au niveau d'une ouverture du noyau intérieur, le couvercle étanche recouvrant l'ouverture du noyau intérieur, et l'encoche et le couvercle étanche définissant conjointement le premier trou de respiration.

8. Ressort pneumatique pour un véhicule selon l'une quelconque des revendications 1 à 7, le premier trou de respiration étant plus éloigné de la partie inférieure du noyau intérieur que le deuxième trou de respiration.

9. Ressort pneumatique pour un véhicule selon l'une quelconque des revendications 1 à 8, un bord protubérant étant ménagé sur le côté extérieur de la paroi latérale du noyau intérieur, une rainure étant ménagée sur le cache anti-poussière, et le cache anti-poussière se serrant sur le bord protubérant au moyen de la rainure.

10. Véhicule, comprenant un ressort pneumatique pour un véhicule selon l'une quelconque des revendications 1 à 9.
